# EUROPÄISCHE PATENTSCHRIFT

(11) **EP 3 094 432 B1**
(45) Veröffentlichungstag und Bekanntmachung des Hinweises auf die Patenterteilung: **10.07.2019**
(21) Anmeldenummer: 14825319.8
(22) Anmeldetag: 19.12.2014
(51) Int. Cl.: B22C 7/00, B22C 9/02, B22C 9/10, F16D 65/00, F16D 65/18

(54) **GUSSFORM FÜR SANDGUSS ZUR HERSTELLUNG EINES BREMSSATTELS**
CASTING MOLD FOR SAND CASTING FOR PRODUCING A BRAKE CALIPER
MOULE DE COULÉE POUR COULÉE EN SABLE SERVANT À FABRIQUER UN ÉTRIER DE FREIN

(30) Priorität: 16.01.2014 DE 102014100434
(43) Veröffentlichungstag der Anmeldung: 23.11.2016
(73) Patentinhaber: KNORR-BREMSE Systeme für Nutzfahrzeuge GmbH, 80809 München (DE)
(72) Erfinder: FISCHL, Tobias, 80336 München (DE)
(86) Internationale Anmeldenummer: PCT/EP2014/078629
(87) Internationale Veröffentlichungsnummer: WO 2015/106927

(56) Entgegenhaltungen:
- WO-A2-2006/044713
- DE-C1- 10 106 591
- KR-B1- 101 021 955
- US-A1- 2005 061 466
- US-B1- 7 108 109

## Beschreibung

Die Erfindung betrifft eine Gussform für Sandguss zur Herstellung eines Bremssattels einer Scheibenbremse nach dem Oberbegriff des Anspruchs 1.

Der Bremssattel einer Scheibenbremse, insbesondere einer Schiebesattel-Scheibenbremse dient der Aufnahme von Funktionsteilen, vor allem einer Zuspanneinrichtung, die in einem durch einen Verschlussdeckel verschließbaren Aufnahmeraum des Bremssattels positioniert ist.

Die Zuspanneinrichtung weist einen pneumatisch oder elektromotorisch betätigbaren Bremshebel auf, der bei Betätigung Bremsbeläge gegen eine fahrzeugseitige Bremsscheibe presst.

Zur, bezogen auf die Bremsscheibe, axialen Verschiebbarkeit des Bremssattels ist dieser auf mit dem Bremsträger verbundenen Führungsholmen gelagert, die mit in Lagerbohrungen des Bremssattels gehaltenen Gleithülsen ein Gleitlager bilden.

Dabei ist eines der Gleitlager als Festlager und das andere als Loslager ausgebildet, wobei das Festlager gegenüber dem Loslager in seiner Länge größer dimensioniert ist und diesem gegenüber vorsteht. Das Festlager ist mit geringem Gleitspiel ausgebildet und dient in der Hauptsache der axialen Führung des Bremssattels.

Demgegenüber weist das Loslager funktionsbedingt ein größeres Lagerspiel auf, da neben der axialen Führung auch ein Toleranzausgleich sowie thermisch bedingte Ausdehnungen berücksichtigt werden müssen.

Da das Festlager überdies die beim Bremsen auftretenden Umfangskräfte im wesentlichen Teil aufnehmen muss, ist dies in seiner Länge größer abgemessen als das Loslager.

Insbesondere aus Kostengründen, d.h., um eine erhöhte spanende Bearbeitung zu vermeiden, werden die Lagerstellen des aus Gusseisen bestehenden Bremssattels beim Gießen angeformt, so dass anschließend lediglich geringe mechanische Bearbeitungen erforderlich sind.

Je nach Einsatzort am Fahrzeug, insbesondere einem Nutzfahrzeug, ist die längere Lagerstelle des Festlagers rechts- oder linksseitig angeordnet. Für eine entsprechende Ausbildung beim Gießen müssen demzufolge unterschiedliche Modelle eingesetzt werden, ebenso wie daran angepasste Kerne, wobei die Modelle jeweils geteilt sind und aus einem Unter- und einem Oberteil bestehen, von denen jedes im Sandbett eines Formkastenteils abgebildet wird.

Naturgemäß ist die Bereitstellung unterschiedlicher Modelle mit entsprechend hohen Kosten verbunden, die insofern als besonders nachteilig anzusehen sind, als Bremssättel in großen Stückzahlen hergestellt und eingesetzt werden.

Eine gattungsgemäße Gussform ist in der WO 2006/044713 A2 offenbart.

Der Erfindung liegt die Aufgabe zugrunde, eine Gussform der gattungsgemäßen Art so weiterzuentwickeln, dass das Gießen des Bremssattels einfacher und kostengünstiger wird.

Diese Aufgabe wird durch eine Gussform mit den Merkmalen des Anspruchs 1 gelöst.

Die Erfindung schafft nun die Möglichkeit für die hinsichtlich ihrer Lagerstellen unterschiedlichen Bremssättel, also für die links- oder rechtsseitige Anordnung der Lagerstelle für das jeweilige Festlager ein Modell zu verwenden.

Die diesbezügliche Ausbildung der Lagerstelle wird lediglich durch die Anpassung der Kerne erreicht, d.h., je nach links- oder rechtsseitiger Ausformung der längeren Lagerstelle ist der zugeordnete Kern angepasst. Hierzu ist der Kern so gestaltet, dass die die Lagerbohrungen abbildenden Bohrkerne unterschiedlich lang sind.

Nach der Erfindung entspricht die Länge beider abzuformenden Lagerstellen der des Festlagers, also der längeren Lagerstelle.

Die Formgebung des Kerns zur Ausbildung der rechten oder linken Lagerstelle ist so ausgeführt, dass ein Anguss im Bereich der kürzen Lagerstelle verhindert wird. Dazu ist der Kern so ausgebildet, dass er die entsprechende Ausformung im Sandbett ausfüllt.

Durch die erfindungsgemäße Ausgestaltung des Modells und des Kerns wird eine wesentliche Vereinfachung des Gießvorgangs insgesamt erreicht mit durchaus bemerkenswerten Kostenvorteilen. Wie bereits zum Stand der Technik erwähnt, werden Bremssättel in großen Stückzahlen hergestellt, so dass sich die Kostenersparnis besonders deutlich darstellt.

Mit Ausnahme der dargestellten Konfiguration der Bohrungskerne ist der Kern gegenüber einem wie er bislang zum Einsatz kommt, unverändert, d.h., die Formgebung des Kerns für die Abbildung des Aufnahmeraumes des Bremssattels, aber auch für die Ausbildung eines Hebeldoms, in dem der Bremshebel positioniert ist, entspricht der bisherigen.

Um den insoweit neuen Kern herstellen zu können, ist lediglich eine Anpassung eines Kernkastens erforderlich, in dem die Kerne hergestellt werden, wobei für die unterschiedlichen, also Rechts-/Linksausbildungen der Bohrungskerne verschiedene Kernkästen zum Einsatz kommen.

Weitere vorteilhafte Ausbildungen der Erfindung sind in den Unteransprüchen gekennzeichnet.

Ein Teil der erfindungsgemäßen Gussform wird nachfolgend anhand der beigefügten Zeichnungen beschrieben.

Es zeigen:
- Figuren 1 bis 3: einen Teil einer Gussform nach dem Stand der Technik in unterschiedlichen Funktionsstellungen
- Figur 4: ein nach der Erfindung ausgebildetes Modell
- Figur 5: unterschiedliche Ausführungsvarianten eines Kerns der Gussform
- Figuren 6 und 7: jeweils einen mit dem neuen Modell hergestellten Bremssattel vor einer Entkernung.

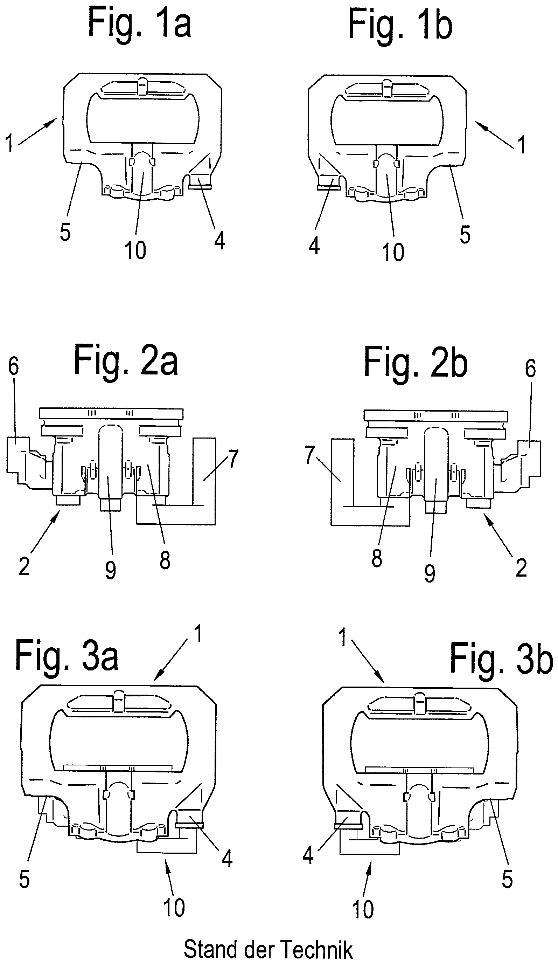

In der Figur 1 ist ein Modell 1 einer Gussform für Sandguss zur Herstellung eines Bremssattels 13 einer Scheibenbremse dargestellt, mit zwei parallel und abständig zueinander angeordneten, jeweils eine Lagerbohrung zur Aufnahme einer Gleithülse aufweisenden Lagerstelle 4, 5, von denen eine rechts- oder linksseitig angeordnete Lagerstelle 4 gegenüber der anderen in axialer Richtung vorsteht. In der Figur 1 ist die längere Lagerstelle 4 in der Abbildung a) zu sehen, während die Abbildung b) die linksseitige Anordnung der längeren Lagerstelle 4 wiedergibt.

Die Gussform weist des Weiteren einen nicht dargestellten mehrteiligen Formkasten auf, in dem durch das zweiteilige Modell 1 in einem Sandbett ein Abdruck ausgeformt wird.

Zur Ausbildung der Lagerstellen 4, 5, sowie eines Aufnahmeraumes 8, in dem Funktionsteile der Scheibenbremse positionierbar sind, beispielsweise eine Zuspanneinrichtung und der oberseitig einen Hebeldom 10 aufweist, zur Unterbringung eines schwenkbaren Bremshebels, ist ein in der Fig. 2 als Einzelheit gezeigter Kern 2 vorgesehen, der in den Abdruck beim Gießen des Bremssattels 13 eingesetzt ist.

In Fig. 2 a) ist ein Bohrungskern 7 für die rechtsseitig längere Lagerstelle 4 abgebildet, während die Figur 2 b) den Bohrungskern 7 für die linksseitige Ausbildung der längeren Lagerstelle 4 wiedergibt. Entsprechend weist der Kern 2 für die anzugießende kürzere Lagerstelle 5 einen kürzeren Bohrungskern 6 auf. In beiden Darstellungen ist auch eine Kerngeometrie 9 für den Hebeldom 10 erkennbar.

Die Figur 3 zeigt das insoweit komplettierte Modell 1 mit eingesetztem Kern 2, in den Abbildungen a) und b) entsprechend den Ausführungen der Figuren 1 und 2.

Dabei ist die Darstellung in Figur 3 lediglich sinnbildlich zu verstehen, da der Kern 2 in den durch das Modell hergestellten Sandabdruck eingesetzt ist, also eine solche Konstellation wie in Figur 3 gezeigt in der Realität nicht vorliegt.

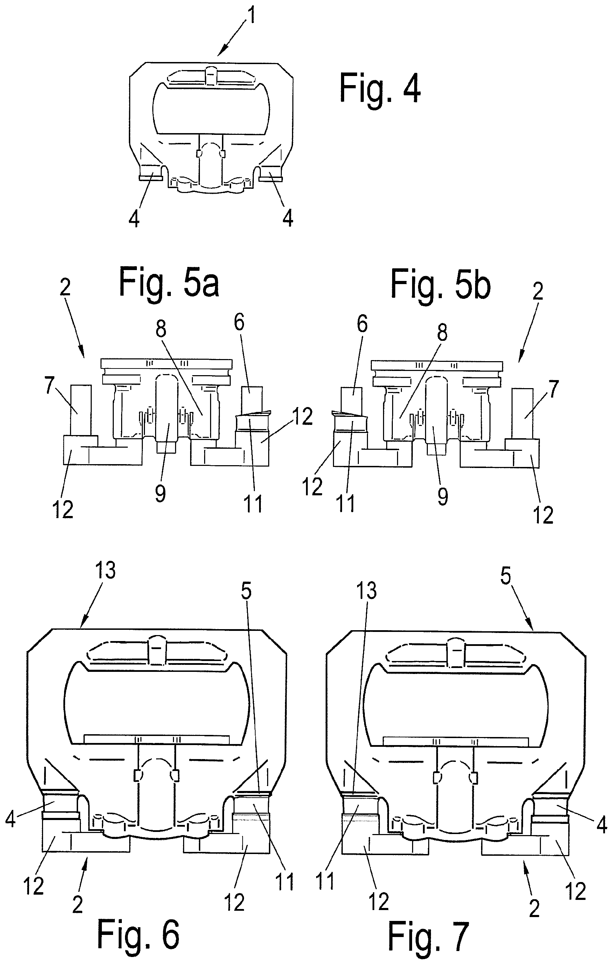

In der Figur 4 ist ein gemäß der Erfindung ausgebildetes Modell 1 dargestellt, bei dem die die Lagerstellen bildenden Bereiche in Form und Abmaß gleich ausgebildet sind und zwar gemäß der längeren, gegossenen das Festlager bildenden Lagerstelle 4. Dabei ist das Modell 1, bezogen auf eine Achse parallel zu den Lagerstellen 4, spiegelsymmetrisch ausgebildet.

Zur Ausbildung der unterschiedlichen Längen der Lagerstellen 4, 5 sind die in der Figur 5 gezeigten Kerne 2 entsprechend ausgebildet.

Neben einem, gegenüber dem Stand der Technik unveränderten Kernbereich 8 für den Aufnahmeraum 8 des Bremssattels 13 sowie einem Kernbereich für Hebeldom 10 sind in der Figur 5a) zwei Bohrungskerne 6, 7 vorgesehen, die von einem Ansatz 12 getragen sind.

Der Bohrungskern 6 ist dabei kürzer als der Bohrungskern 7, der in seiner Länge dem auszubildenden Festlager 4 bzw. der Lagerbohrung des Festlagers 4 entspricht.

Der kürzere Bohrungskern 6 ist in seinem Längenabmaß dem Längenabmaß der kürzeren Lagerstelle 5 entsprechend dimensioniert.

Zwischen dem Ansatz 12 und dem Bohrungskern 6 ist ein Bündchen 11 angeformt, dessen Außendurchmesser dem Außendurchmesser der Lagerstelle 4 entspricht und dessen Länge durch die Differenz zwischen der Länge der längeren Lagerstelle 4 und der kürzeren Lagerstelle 5 bestimmt wird.

Damit wird der durch das Modell 1 hinterlassene Abdruck im Sandbett rechts- oder linksseitig durch das Bündchen 11 so weit ausgefüllt, dass dieser Bereich nicht mit angegossen wird, wohingegen die andere Lagerstelle 4, entsprechend dem Bohrungskern 7 ausgeführt wird.

Die Figuren 6 und 7 schließlich zeigen jeweils den gegossenen Bremssattel 13 vor einer Entfernung des Kerns 2. Darin ist die unterschiedliche Längenausbildung der Lagerstellen 4 und 5 deutlich zu erkennen, wobei der gegossene Bremssattel 13 nach Figur 6 der Abbildung nach Figur 3b) und der Bremssattel nach Figur 7 der Abbildung gemäß der Figur 3a) entspricht.

## Patentansprüche

1. Gussform für Sandguss zur Herstellung eines Bremssattels (13) einer Scheibenbremse mit einem Aufnahmeraum und zwei parallel und abständig zueinander angeordneten, jeweils eine Lagerbohrung zur Aufnahme einer Gleithülse aufweisenden Lagerstellen (4, 5), von denen eine rechts- oder linksseitig angeordnete gegenüber der anderen in axialer Richtung vorsteht, wobei die Gussform einen mehrteiligen Formkasten, ein Modell (1) zur Abformung im Sandbett sowie einen Kern (2) zur Ausbildung der Lagerstellen (4, 5) und des Aufnahmeraums aufweist, **gekennzeichnet durch folgende Merkmale:**
- die die beiden Lagerstellen (4, 5) abbildenden Bereiche des Modells (1) sind in Form und Abmaßen gleich ausgebildet,
- beide Lagerstellen (4) des Modells (1) entsprechen der längeren Lagerstelle (4) des Bremssattels (13),
- der Kern (2) weist zwei Bohrungskerne (6, 7) auf, wobei der Bohrungskern (7) in seiner Länge der Länge der längeren Lagerstelle (4) und der andere Bohrungskern (6) der Länge der kürzeren Lagerstelle (5) entspricht, an den sich ein Bündchen (11) anschließt, das in Abmaß und Konfiguration dem vorstehenden Teil einer Lagerstelle (4) des Modells (1) entspricht,
- das Bündchen (11) entspricht der Differenz zwischen der Länge der kürzeren Lagerstelle (5) und der längeren Lagerstelle (4),
- das Bündchen (11) füllt den zugeordneten, durch die Lagerstellen (4) des Modells (1) eingebrachten Sandabdruck aus.

2. Gussform nach Anspruch 1, **dadurch gekennzeichnet, dass** sich an den Bohrungskern (7) und das Bündchen (11) jeweils ein Absatz (12) anschließt.

3. Gussform nach Anspruch 1 oder 2, **dadurch gekennzeichnet, dass** der Kern (2) einstückig ausgebildet ist.

4. Gussform nach einem der vorhergehenden Ansprüche, **dadurch gekennzeichnet, dass** das Bündchen (11) rechts- oder linksseitig des Kernbereichs (8) für den Aufnahmeraum angeordnet ist.

5. Gussform nach einem der vorhergehenden Ansprüche, **dadurch gekennzeichnet, dass** das Modell (1), bezogen auf eine Achse parallel zu den Lagerstellen (4, 5) spiegelsymmetrisch ausgebildet ist.

## Claims

1. Casting mold for sand casting for producing a brake caliper (13) of a disk brake with a reception space and two bearing points (4, 5), which are arranged in parallel and at a spacing to one another and respectively have a bearing bore for receiving a sliding sleeve and from which one arranged on the right-hand side or left-hand side projects in the axial direction with respect to the other, wherein the casting mold has a multipart molding box, a model (1) for molding in the sand bed as well as a core (2) for forming bearing points (4, 5) and the reception space, **characterized by the following features:**
- the regions of the model (1) which represent the two bearing points (4, 5) are formed identically in form and dimensions,
- both bearing points (4) of the model (1) correspond to the longer bearing point (4) of the brake caliper (13),
- the core (2) has two bore cores (6, 7), wherein the bore core (7) corresponds in terms of its length to the length of the longer bearing point (4) and the other bore core (6) corresponds to the length of the shorter bearing point (5) which is adjoined by a cuff (11) which corresponds in terms of dimension and configuration to the protruding part of a bearing point (4) of the model (1),
- the cuff (11) corresponds to the difference between the length of the shorter bearing point (5) and the longer bearing point (4),
- the cuff (11) fills out the assigned sand impression introduced by the bearing points (4) of the model (1).

2. Casting mold according to Claim 1, **characterized in that** in each case a projection (12) adjoins the bore core (7) and the cuff (11).

3. Casting mold according to Claim 1 or 2, **characterized in that** the core (2) is formed in one piece.

4. Casting mold according to any one of the preceding claims, **characterized in that** the cuff (11) is arranged on the right-hand or left-hand side of the core region (8) for the reception space.

5. Casting mold according to any one of the preceding claims, **characterized in that** the model (1) is formed to be mirror-symmetrical relative to an axis parallel to the bearing points (4, 5).

## Revendications

1. Moule de coulée en sable pour fabriquer un étrier (13) d'un frein à disque ayant un espace de réception et deux points (4, 5) d'appui, qui sont disposés parallèlement et à distance l'un de l'autre, qui ont chacun un trou d'appui pour recevoir une douille coulissante et dont l'un, disposé du côté droit ou du côté gauche, est en saillie par rapport à l'autre dans la direction axiale, le moule de coulée ayant un châssis en plusieurs parties, un modèle (1) de moulage dans le lit de sable, ainsi qu'un noyau (2) pour constituer les points (4, 5) d'appui et l'espace de réception,**caractérisé par** les caractéristiques suivantes :
- les parties, reproduisant les deux points (4, 5) d'appui, du modèle (1) sont constituées pareillement en forme et en dimension,
- les deux points (4) d'appui du modèle (1) correspondent au point (4) d'appui le plus long de l'étrier (13) de frein,
- le noyau (2) à deux noyaux (6, 7) à trou, le noyau (7) à trou correspondant dans sa longueur à la longueur du point (4) d'appui le plus long et l'autre noyau (6) à trou à la longueur du point (5) d'appui le plus court, auquel se raccorde une collerette (11), qui, en dimension et en configuration, correspond à la partie en saillie d'un point (4) d'appui du modèle (1),
- la collerette (11) correspond à la différence entre la longueur du point (5) d'appui le plus court et la longueur du point (4) d'appui le plus long,
- la collerette (11) remplit l'empreinte de sable associée donnée par les points (4) d'appui du modèle (1).

2. Moule de coulée suivant la revendication 1, **caractérisé en ce que**, respectivement, un ressaut (12) se raccorde aux noyaux (7) à trou et à la collerette (11).

3. Moule de coulée suivant la revendication 1 ou 2, **caractérisé en ce que** le noyau (2) est en une seule pièce.

4. Moule de coulée suivant l'une des revendications précédentes, **caractérisé en ce que** la collerette (11) est disposée du côté droit ou du côté gauche de la partie (8) de noyau pour l'espace de réception.

5. Moule de coulée suivant l'une des revendications précédentes, **caractérisé en ce que** le modèle (1) est symétrique, comme en un miroir, par rapport à un axe parallèlement aux points (4, 5) d'appui.
